(19) Europäisches Patentamt
European Patent Office
Office européen des brevets

(11) Veröffentlichungsnummer: **0 043 582**
**A2**

(12) # EUROPÄISCHE PATENTANMELDUNG

(21) Anmeldenummer: **81105255.4**

(22) Anmeldetag: **07.07.81**

(51) Int. Cl.³: **C 08 F 10/00**, C 08 F 4/62

(30) Priorität: **08.07.80 DE 3025760**

(43) Veröffentlichungstag der Anmeldung: **13.01.82**
**Patentblatt 82/2**

(84) Benannte Vertragsstaaten: **AT BE DE FR GB IT NL**

(71) Anmelder: **WACKER-CHEMIE GMBH,**
**Prinzregentenstrasse 22, D-8000 München 22 (DE)**

(72) Erfinder: **Kurz, Dieter, Dr. Dipl.-Ing.,**
**Langdörfferstrasse 12a, D-8263 Burghausen (DE)**

(54) **Verfahren zur Polymerisation von alpha-Olefinen.**

(57) Polyäthylen mit breiter Molekulargewichtsverteilung kann hergestellt werden in Gegenwart eines in zwei Reaktionsschritten hergestellten Katalysatorfeststoffes, aus einem Magnesium und Chlor enthaltenden Primärfeststoff, der in einer Reaktionsstufe A mit Peroxidverbindung(en) und mit Halogen enthaltenden Metallverbindungen von Elementen der IV. und/oder V. Nebengruppe(n) des Periodensystems nach Mendeleev und in einer Reaktionsstufe B mit Halogen enthaltenden Metallverbindungen von Elementen der IV. und/oder V. Nebengruppe(n) und Metallorganylverbindung(en) der II. und/oder III. Hauptgruppe des Periodensystems umgesetzt worden ist. Die Reihenfolge der Reaktionsstufen A und B ist nicht entscheidend für den Erfolg des erfindungsgemässen Verfahrens.

EP 0 043 582 A2

0043582

W A C K E R - C H E M I E
G M B H

München, 22. Oktober 1980
LC-PAT/Dr.Da/ra

Wa 8010-L

# Verfahren zur Polymerisation von alpha-Olefinen

Die Polymerisation von α-Olefinen, insbesondere Äthylen, mit Hilfe von Katalysatorfeststoffen, die Elemente der IV. und/oder V. Nebengruppe des Periodensystems, Magnesium, Halogen, Sauerstoff und gegebenenfalls Bor oder Aluminium enthalten und mit Aluminiumalkylen aktiviert werden, in der Gasphase oder in Kohlenwasserstoffen als Verdünnungs- und Dispergiermittel ist bekannt.

Da die Eigenschaften der so hergestellten Polyolefine sehr stark vom eingesetzten Katalysator abhängen, wurden bereits verschiedenartige Katalysatorsysteme zur Polymerisation von α-Olefinen vorgeschlagen.

Die meisten bisher bekannten, mit Aluminiumalkylen aktivierten Katalysatorfeststoffe liefern bei der Polymerisation von α-Olefinen Produkte mit enger Molekulargewichtsverteilung, d. h., der mittlere Polymerisationsgrad eines bei einem Polymerisationsansatz hergestellten Polyolefingemisches liegt in einem engen Bereich. Diese enge Molekulargewichtsverteilung des Polymerisates bewirkt, daß daraus hergestellte Extrudate infolge "Schmelzbruches" rauhe Oberflächen aufweisen, so daß diese Polymerisate für viele Verwendungen, z. B. zur Herstellung von Hohlkörpern und Folien, ungeeignet sind.

Es stellte sich daher die Aufgabe, Polyolefine mit breiter Molekulargewichtsverteilung herzustellen.

Von den wenigen bekannten Katalysatorsystemen, die Produkte mit breiter Molekulargewichtsverteilung liefern, ist ein Großteil technisch nicht brauchbar, weil das Polymerisationsprodukt in seinen Korneigenschaften nicht den bei der Polymerisation, Aufarbeitung und Weiterverarbeitung zu stellenden Anforderungen genügt oder weil die Molekulargewichtsverteilung für viele Anwendungsgebiete noch nicht breit genug ist.

Ein anderer Teil dieser Katalysatorsysteme besitzt keine genügend hohe Katalysator-Aktivität, so daß größere Mengen eingesetzt werden müssen, die ins Polymerisat gelangen, dessen Eigenschaften, insbesondere Stabilität beeinträchtigen und daher durch aufwendige Folgeprozesse unschädlich gemacht oder entfernt werden müssen, oder entfaltet erst bei sehr hohen Polymerisationsdrücken ausreichende Aktivität. Solche Systeme können jedoch nur in speziellen Polymerisationsreaktoren mit sehr hoher Druckfestigkeit unter hohem Energieeinsatz eingesetzt werden.

Ein weiterer Teil dieser bekannten Systeme liefert nur dann Produkte mit breitverteilten Molekulargewichten, wenn die Polymerisation in Gegenwart spezieller, genau einzuhaltender Aktivatormischungen, ein anderer, wenn die Polymerisation in Gegenwart zusätzlicher Hilfsstoffe, welche anschließend wieder aus dem Polymerisationsmedium entfernt werden müssen, durchgeführt wird.

Ein weiterer Teil solcher bekannter Systeme scheidet für den großtechnischen Einsatz aus, weil die physikalischen Eigenschaften, wie Steifigkeit, Schlagzähigkeit und Spannungsrißbeständigkeit der aus dem Polymerisationsprodukt hergestellten Formkörper für viele Anwendungszwecke nicht ausreichend sind.

Manche Katalysatoren verfärben auch das Produkt. Diese unerwünschten Verfärbungen werden hauptsächlich durch Katalysatorreste hervorgerufen, die darüberhinaus vielfach die Lichtstabilität des Produktes beeinträchtigen.

Aufgabe der Erfindung war es daher, ein Polymerisationsverfahren für alpha-Olefine zur Verfügung zu stellen, das Produkte breiter Molekulargewichtsverteilung, guter physikalischer Eigenschaften, guter Verarbeitbarkeit und guter Reinheit liefert.

Diese Aufgabe wird durch die vorliegende Erfindung gelöst.

Gegenstand der Erfindung ist ein Verfahren zur diskontinuierlichen oder kontinuierlichen Polymerisation von alpha-Olefinen in der Gasphase oder in Kohlenwasserstoffen als Dispergiermittel bei Drücken von 2 - 40 bar, vorzugsweise bis etwa 15 bar, und Temperaturen von 60 bis 100 °C gegebenenfalls unter Verwendung von Wasserstoff als Molekulargewichtsregler in Gegenwart eines Feststoffes als Katalysator, der Elemente der IV. und/oder V. Nebengruppe(n) des Periodensystems der Elemente, Magnesium, Halogen, Sauerstoff und gegebenenfalls ein (weiteres)Element der II. und/oder III. Hauptgruppe(n) des Periodensystems enthält und mit Metallorganylverbindungen der II. und/oder III. Hauptgruppe(n) des Periodensystems aktiviert wird, dadurch gekennzeichnet, daß der anschließend in der Polymerisation von alpha-Olefinen noch zu aktivierende Katalysator durch Umsetzung eines Magnesium und Halogen enthaltenden Primärfeststoffes in zwei aufeinanderfolgenden Reaktionsstufen A und B hergestellt wird, wobei der Feststoff auf Basis von Magnesiumverbindung(en)

in Reaktionsstufe A mit Peroxidverbindung(en) und mit Halogen enthaltender(n) Metallverbindung(en) eines oder mehrerer Elemente(s) der IV. und/oder V. Nebengruppe(n) des Periodensystems behandelt wird und

in Reaktionsstufe B mit Halogen enthaltender(n) Metallverbindung(en) von Elementen der IV. und/oder V. Nebengruppe(n) und mindestens einer Metallorganylverbindung der II. und/oder III. Hauptgruppe(n) des Periodensystems umgesetzt wird.

Unter "einer ein Element enthaltenden" Verbindung wird hier verstanden, daß das besagte Element in der besagten Verbindung chemisch gebunden ist, unter Periodensystem das nach Mendeleev (vgl. Handbook of Chemistry and Physics, 55. Auflage, Umschlaginnenseite).

Als alpha-Olefine, die nach dem erfindungsgemäßen Verfahren polymerisiert werden können, können alle alpha-Olefine eingesetzt werden, die bereits bisher bei Drücken von etwa 2 - 40 bar in Gegenwart von Feststoffkatalysatoren des sogenannten "Ziegler-Types" polymerisiert werden konnten. Bevorzugt wird Äthylen, das gegebenenfalls im Gemisch mit bis zu 10 mol% an alpha-Olefinen mit 3 - 6 Kohlenstoffatomen eingesetzt und copolymerisiert werden kann.

Zur Herstellung des in dem erfindungsgemäßen Verfahren verwendeten Katalysators geht man von einem Primärfeststoff aus, der Magnesium und Halogen enthält.

Dieser Primärfeststoff kann vorzugsweise hergestellt werden, indem in Kohlenwasserstoffen lösliche Magnesiumverbindung(en) mit Chlorkohlenwasserstoff- und/oder Chlorkohlenstoffverbindung(en) jeweils mit 1 - 6 Kohlenstoffatomen umgesetzt wird (werden), von denen wenigstens eines mindestens zwei Chloratome direkt gebunden trägt.

In Kohlenwasserstoffen lösliche geeignete Magnesiumverbindungen werden einzeln oder als Gemisch eingesetzt, insbesondere magnesiumorganische Verbindungen der allgemeinen Formeln $R^1MgR^2$ und/oder $R^1MgOR^2$, in denen $R^1$ und $R^2$ gleiche oder verschiedene ge-

radkettige oder verzweigte Alkyl- oder Arylreste mit 2 bis 20 C-Atomen bedeuten.

Besonders bevorzugt werden $R^1MgR^2$-Verbindungen, wie z. B. n-Butyläthylmagnesium, Di-n-butylmagnesium, n-Butyl-isobutylmagnesium, n-Butyl-sec-butylmagnesium, Di-n-hexylmagnesium, Di-n-pentylmagnesium, Di-n-octylmagnesium, Diphenylmagnesium oder Gemische dieser Verbindungen.

Diese magnesiumorganischen Verbindungen werden besonders vorzugsweise mit gesättigten Chlorkohlenwasserstoff- und/oder Chlorkohlenstoffverbindungen umgesetzt, wie Tetrachlorkohlenstoff, 1,1,1-Trichloräthan, 1,1,2-Trichloräthan, 1,1,2,2- und 1,1,1,2-Tetrachloräthan, Pentachloräthan, Hexachloräthan oder Gemischen dieser Verbindungen. Besonders bevorzugt wird jedoch Chloroform eingesetzt.

Die Magnesiumverbindung(en) und die organische Chlorverbindung, z. B. besonders vorzugsweise Chloroform, werden vorzugsweise in Mengen von 0,5 bis 10, besonders vorzugsweise 1 bis 4, mol Chlorverbindung je mol Magnesiumverbindung, vorzugsweise bei Temperaturen von -10 °C bis +150 °C, insbesondere 20 bis 80 °C unter Rühren umgesetzt.

Hierbei ist die Reaktionszeit und der Verdünnungsgrad der Reaktanten weitgehend unkritisch. Die Reaktion kann binnen weniger Minuten oder einiger Stunden durchgeführt werden, z. B. in 30 bis 120 Minuten. Der Verdünnungsgrad kann in weiten Grenzen variiert werden, z. B. kann die organische Chlorverbindung, wie das besonders bevorzugte Chloroform, in reiner Form oder in Kohlenwasserstoffen gelöst, verwendet werden. Die magnesiumorganische Verbindung muß vor Einsetzen der Reaktion allerdings homogen in Kohlenwasserstoffen gelöst sein.

Die Reaktion kann in der Weise durchgeführt werden, daß die organische Chlorverbindung zur gelösten Magnesiumverbindung unter Rühren zudosiert wird oder daß beide Reaktanten gleichzeitig in

das Reaktionsgefäß unter Rühren eindosiert werden. Bevorzugt werden jedoch die organischen Chlorverbindungen der vorstehend definierten Art, besonders vorzugsweise Chloroform, in reiner Form oder homogen in Kohlenwasserstoff gelöst vorgelegt und die Kohlenwasserstofflösung der magnesiumorganischen Verbindung(en) unter Rühren zudosiert, da auf diese Weise ein für das erfindungsgemäße Verfahren besonders gut geeigneter Katalysatorfeststoff hergestellt werden kann.

Der auf die geschilderte Weise hergestellte Chlor und Magnesium enthaltende Primärfeststoff kann direkt weiterverwandt oder aber vorzugsweise vor der weiteren Behandlung mehrmals mit Kohlenwasserstoffen gewaschen werden.

Der Primärfeststoff wird dann mit Kohlenwasserstoff(en) versetzt, so daß eine rührfähige Suspension entsteht. Die Konzentration ist nicht entscheidend, jedoch sollte sie wegen der besseren Handhabung und der besseren weiteren Umsetzung in der nun folgenden ersten Reaktionsstufe möglichst konzentriert sein.

Die Reihenfolge der beiden aufeinanderfolgenden Reaktionsstufen A und B ist nicht entscheidend für den Erfolg des erfindungsgemäßen Polymerisationsverfahrens. So kann der in der vorstehend beschriebenen Weise hergestellte Primärfeststoff zunächst der Reaktionsstufe A unterworfen werden und nach Beendigung dieser Umsetzung entweder direkt oder nach einem zwischengeschalteten Reinigungsschritt in der Reaktionsstufe B weiter umgesetzt werden. Bevorzugt wird jedoch die umgekehrte Reihenfolge der Reaktionsstufen vorzugsweise unter Zwischenschaltung eines Reinigungsschrittes, also die Reaktionsstufe B vor Reaktionsstufe A durchgeführt.

Der Primärfeststoff (oder in der bevorzugten Ausführungsform der Herstellung des Katalysators der in der Reaktionsstufe B modifizierte Feststoff) wird in der Reaktionsstufe A mit Peroxidverbindung(en) und mit Halogen enthaltender(n)

Metallverbindung(en) eines oder mehrerer Elemente(s) der IV. und/ oder V. Nebengruppe(n) des Periodensystems umgesetzt.

Hierbei ist es möglich, erst die genannte(n) Metallverbindung(en) und dann die Peroxidverbindung(en) zu dem (Primär)-Feststoff zu dosieren oder beide Komponenten gleichzeitig zum magnesiumhaltigen Feststoff zu dosieren, jedoch wird vorzugsweise zunächst die Suspension des (Primär)-Feststoffes mit der (den) Peroxidverbindung(en) ehandelt und anschließend die Metallverbindung(en) zugesetzt. Selbstverständlich kann auch die Suspension des Feststoffes zu den genannten Reaktanten zudosiert werden, hierbei sollte aber vorzugsweise der eine Reaktant nicht mit dem anderen Reaktanten zusammenkommen, bevor er mit dem (Primär)-Feststoff zusammengegeben worden ist.

Die Umsetzung der Peroxidverbindung(en) mit der Feststoffsuspension erfolgt vorzugsweise bei -20 bis 100 °C, besonders vorzugsweise bei 0 bis 100 °C, die der Metallverbindung(en) mit der Feststoffsuspension vorzugsweise bei -20 bis 150 °C, besonders vorzugsweise bei 0 bis 150 °C, insbesondere bei 50 bis 100 °C.

Soweit die Halogen enthaltenden Metallverbindungen der IV. und/ oder V. Nebengruppe(n) des Periodensystems flüssig sind, können sie als solche eingesetzt werden, vorzugsweise und wenn sie nicht flüssig sind, werden sie jedoch vorzugsweise möglichst konzentriert gelöst in Kohlenwasserstoffen eingesetzt.

Die Reaktionszeiten dieser Reaktionsstufe A sind nicht kritisch, sie können von wenigen Minuten (z. B. 5 Minuten) bis zu mehreren Stunden (z. B. 4 Stunden) betragen.

Es ist bei Durchführung von Reaktionsstufe A nach Reaktionsstufe B vielfach vorteilhaft, den in Stufe A vorzugsweise zunächst nur mit der (den) Peroxidverbindung(en) behandelten

Feststoff durch wiederholtes Waschen mit Kohlenwasserstoffen, Sedimentieren und Dekantieren weitgehend von löslichen Verbindungen zu befreien, bevor die Halogen enthaltende(n) Nebengruppen-Metallverbindung(en) zugegeben wird (werden).

Als Peroxidverbindungen, die erfindungsgemäß eingesetzt werden können, kommen Alkylhydroperoxide, Dialkylperoxide, Diacylperoxide, Peroxycarbonsäuren, Peroxysulfonsäuren, Alkylester dieser Säuren, Ketonperoxide, Perketale und Wasserstoffperoxide in Frage. Bevorzugt werden Alkylhydroperoxide und/oder Dialkylperoxide eingesetzt, für die als Beispiele genannt seien:

2,2-Bis(tert.-butylperoxy)butan, 1,1-Bis(tert.-butylperoxy)-cyclohexan, 1,1-Bis(tert.-butylperoxy)-3,3,5-trimethylcyclohexan, Di-tert.-butylperoxid, Dicumylperoxid, tert.-Butylhydroperoxid, Pinanhydroperoxid und Cumolhydroperoxid.

Die Peroxide können einzeln oder als Gemisch, entweder in reiner Form oder aber in an sich bekannter Weise vermischt mit Phlegmatisierungsmittel eingesetzt werden.

Unter Halogen enthaltenden Metallverbindungen von Elementen der IV. und V. Nebengruppe(n) des Periodensystems werden hier bevorzugt die Verbindungen des Titans, des Zirkons und des Vanadins (Vanadiums) verstanden; von diesen wiederum werden die Titanverbindungen besonders bevorzugt.

Insbesondere haben sich in der Reaktionsstufe A der Katalysatorherstellung die Verbindungen der allgemeinen Formel

$$X_a\,Ti\,(OR^3)_{4-a}$$

und in der später eingehend beschriebenen Reaktionsstufe B der Katalysatorherstellung die Verbindungen der allgemeinen Formel

$$X'_b \, Ti \, (OR^4)_{4-b}$$

als geeignet erwiesen. In diesen Formeln bedeuten X und X' unabhängig voneinander jeweils Halogen, besonders bevorzugt jeweils Chlor, $R^3$ und $R^4$ unabhängig voneinander jeweils gleiche oder verschiedene geradkettige oder verzweigte Alkyl- und/oder Arylreste mit 1 bis 8 Kohlenstoffatomen und a und b unabhängig voneinander jeweils 2, 3 oder 4, vorzugsweise 4. Die Verbindungen können jeweils rein oder als Gemische eingesetzt werden. Besonders bevorzugt ist jeweils Titantetrachlorid.

Wird die Reaktionsstufe A als erste Reaktionsstufe bei der Bereitung des Katalysators für das erfindungsgemäße Verfahren durchgeführt, so wird der so modifizierte Feststoff nun vorzugsweise bei 0 bis 100 °C, insbesondere 20 bis 100 °C durch wiederholtes Waschen mit Kohlenwasserstoffen, Sedimentieren und Dekantieren weitgehend von löslichen Metall-, insbesondere Titan-, -Verbindungen befreit.

Vorzugsweise wird er danach wiederum, wie bereits der Primärfeststoff vor der ersten Reaktionsstufe, in Kohlenwasserstoffen suspendiert. Hierbei gilt für die Konzentration wiederum das bereits dort gesagte. Sinngemäß wird auch verfahren, wenn die im folgenden beschriebene Reaktionsstufe B als erste Reaktionsstufe der Katalysatorbereitung durchgeführt wird.

Der in Reaktionsstufe A modifizierte Feststoff bzw. bei der bevorzugten Arbeitsweise, bei der die Reaktionsstufe A nach Reaktionsstufe B durchgeführt wird, der Primärfeststoff wird in Reaktionsstufe B mit mindestens einer Halogen enthaltenden Verbindung mindestens eines Elementes der IV. und/oder V. Nebengruppe(n) des Periodensystems, wie sie weiter oben bereits definiert worden ist (sind), und mit mindestens einer Metallorganylverbindung der II. und/oder III. Hauptgruppe(n) des Periodensystems umgesetzt.

Die Reaktion wird vorzugsweise bei -40 bis +100 °C, insbesondere bei -5 bis +70 °C durchgeführt.

Unter den Elementen der II. und III. Hauptgruppen des Periodensystems werden hier insbesondere Beryllium, Magnesium, Bor und Aluminium verstanden, vorzugsweise das Magnesium und besonders vorzugsweise das Aluminium.

Unter den Metallorganylverbindungen dieser Elemente werden solche verstanden, die die Metallatome an Alkyl- und/oder Arylreste mit jeweils 1 bis 20 Kohlenstoffatomen gebunden enthalten. Nicht durch diese genannten Reste gebundene Valenzen der Metalle können weiterhin mit Wasserstoff und/oder Halogen, vorzugsweise Chlor, ferner auch mit Alkoxy-, Aryloxy- und/oder Siloxyresten mit jeweils 1 bis 20 Kohlenstoffatomen abgesättigt sein. Weiterhin können oligomere Alkylaluminiumverbindungen eingesetzt werden, d. h. solche Verbindungen, die neben den vorstehend genannten Substituenten auch Aluminium-Sauerstoff-Aluminium-Bindungen enthalten. Bevorzugt werden hier Verbindungen der später genauer beschriebenen Formel $AlR^5_z Y_{3-z}$ und/oder Oligomere dieser Verbindungen. Als Beispiele für bevorzugte Verbindungen dieser Art seien genannt:

Aluminiumtriäthyl, Aluminiumtri-n-butyl, Aluminiumtri-isobutyl, Aluminiumtri-n-octyl, Aluminium-isoprenyl, Diäthylaluminiumhydrid, Diisobutylaluminiumhydrid, Äthylaluminiumdichlorid, Diäthylaluminiumchlorid, Äthylaluminiumsesquichlorid, Diäthyläthoxyaluminium, Äthyldimethylsiloxyaluminiumdiäthyl, Bis-(di-isopropylaluminium)oxid und deren Gemische.

In der vorstehend beschriebenen Reaktionsstufe B werden Diäthylaluminiumchlorid, Äthylaluminiumsesquichlorid, Aluminiumisoprenyl, Aluminiumtri-n-octyl oder Gemische dieser Verbindungen besonders bevorzugt.

Die Reaktionszeit der Reaktionsstufe B kann von wenigen Minuten (z. B. 15 Minuten) bis zu mehreren Stunden (z. B. 2 Stunden) betragen, sie ist nicht kritisch.

Die Reaktionsstufe B kann so durchgeführt werden, daß zunächst die vorzugsweise in Kohlenwasserstoff gelösten Hauptgruppenverbindungen, z. B. solche der vorstehend genannten Aluminiumverbindungen, und der vorzugsweise in Kohlenwasserstoffen suspendierte Primärfeststoff bzw. in Stufe A modifizierte Feststoff zusammengegeben und danach die ebenfalls vorzugsweise in Kohlenwasserstoffen gelösten Nebengruppenverbindungen, z. B. das besonders bevorzugte Titantetrachlorid, zudosiert werden. Auch ein gleichzeitiges Zudosieren der Komponenten ist möglich. Vorzugsweise jedoch legt man die Nebengruppenverbindung, z. B. das bevorzugte Titantetrachlorid, und den Feststoff, beide vorzugsweise in Kohlenwasserstoffen gelöst bzw. suspendiert, vor und dosiert die Hauptgruppenverbindungen, vorzugsweise die Aluminiumorganylverbindungen, zu.

In einer bevorzugten Ausführungsform werden zur Modifizierung des Primärfeststoffes je Mol (Grammatom) im Feststoff gebundenen Magnesiums in den Reaktionsstufen A und B zusammen insgesamt 0,015 bis 50, insbesondere 0,11 bis 15 Mol an Halogen enthaltenden Metallverbindungen der Elemente der IV. und/oder V. Nebengruppe(n), insbesondere Titantetrachlorid eingesetzt. Von dieser auf 1 Mol gebundenes Magnesium bezogenen Menge werden in Reaktionsstufe B vorzugsweise 0,01 bis 5, insbesondere 0,1 bis 1 Mol verwendet. Außerdem werden in Reaktionsstufe B dieser bevorzugten Ausführungsform je Mol an dabei verwendeter genannter Metallverbindungen 0,3 bis 5, insbesondere 0,5 bis 2,5 Mol an Metallorganylverbindungen der Elemente der II. und/oder III. Hauptgruppe(n) eingesetzt.

Die restliche Menge der Metallverbindung(en) der genannten Nebengruppenelemente wird in derselben bevorzugten Ausführungsform in Reaktionsstufe A zusammen mit einer solchen Menge an Peroxyverbindung(en) verwendet, daß je Mol an in (Primär-)Feststoff gebundenem Magnesium 0,001 bis 5, insbesondere 0,01 bis 1 Mol an Aktivsauerstoff enthalten sind. Dabei wird die Peroxyverbindung höchstens in stöchiometrischer Menge zu den genannten Metallverbindungen der Nebengruppenelemente verwendet. Von den genannten Mengen kann selbstverständlich abgewichen werden, obwohl nicht zweckmäßig und daher auch nicht bevorzugt ist, da bei einer Unterschreitung der Grenzen die Aktivität des Katalysatorfeststoffes meist stark nachläßt, während bei Überschreitung der Grenzen keine dem Aufwand entsprechende Vorteile mehr erreicht werden.

Unter einem Mol eines Substanzgemisches wird diejenige Stoffmenge verstanden, die theoretisch (Umsatz = 100 % der Theorie) mit der gleichen Menge eines Reaktionspartners reagiert je 1 Mol einer reinen Substanz, die in diesem Substanzgemisch enthalten ist.

Vorzugsweise wird der Katalysatorfeststoff nach der Modifizierung in den beiden Reaktionsstufen A und B bei 0 bis 100 °C durch wiederholtes Waschen mit Kohlenwasserstoffen, Sedimentieren und Dekantieren weitgehend von löslichen Verbindungen befreit.

Es kann auch vorteilhaft sein, insbesondere wenn die Reaktionsstufe B vor der Reaktionsstufe A durchgeführt wird, wie dies besonders bevorzugt ist, den Katalysatorfeststoff nach der 2. Reaktionsstufe einer Nachbehandlung zu unterwerfen.

Diese Nachbehandlung erfolgt durch Umsetzung einer rührfähigen Suspension des Katalysatorfeststoffes in Kohlenwasserstoffen mit einer oder mehreren, vorzugsweise ebenfalls in Kohlenwasserstoffen gelösten Metallorganylverbindung(en) der II. und/oder III. Hauptgruppe(n) des Periodensystems, wie sie bereits vorstehend definiert sind. Von den bevorzugten aluminiumorganischen Verbindungen werden insbesondere Diäthylaluminiumchlorid, Äthylaluminiumsesquichlorid, Aluminiumisoprenyl, Aluminium-tri-n-octyl und deren Gemische bevorzugt.

Diese zusätzliche Nachbehandlung des Katalysatorfeststoffes wird vorzugsweise bei Temperaturen von -40 °C bis 150 °C, insbesondere von -20 °C bis 100 °C unter Einsatz von vorzugsweise 0,01 bis 5, insbesondere 0,1 bis 1, Mol der Metallorganylverbindung(en) je Mol im Feststoff gebundenem Magnesiums durchgeführt.

Das eingangs über die Konzentration der Feststoffsuspension gesagte trifft für sämtliche Stufen der Katalysatorbereitung zu. Die Reaktionszeit der Nachbehandlung kann ebenfalls einige Minuten bis mehrere Stunden (z. B. 15 Minuten bis 2 Stunden) betragen.

Eine weitere bevorzugte Möglichkeit der Nachbehandlung, sei es, daß Reaktionsstufe A vor oder nach Reaktionsstufe B durchgeführt wurde, besteht darin, den Feststoff in Suspension mehrere Stunden (z. B. 2 bis 8 Stunden) bei Temperaturen von 50 bis 100 °C zu altern und dann auszuwaschen.

Die Reaktionsstufe B und die erfindungsgemäße Druchführung der Polymerisation müssen unter Ausschluß auch geringer Mengen von Sauerstoff und von Wasser oder Wasserdampf durchgeführt werden.

Der in vorstehend beschriebener Weise hergestellte Katalysatorfeststoff, der vorzugsweise durch Waschen bei vorzugsweise 0 bis

0043582

100 °C mit Kohlenwasserstoffen, Sedimentieren und Dekantieren, insbesondere von löslichen Metallverbindungen, befreit wurde, eignet sich zur Verwendung bei der erfindungsgemäßen Polymerisation derjenigen alpha-Olefine, die bisher bereits in Gegenwart von Katalysatoren des "Ziegler-Types" bei Drücken von etwa 2 bis 40 bar in der Gasphase oder in Dispersion polymerisiert werden konnten. In einer bevorzugten Ausführungsform des erfindungsgemäßen Verfahrens wird Äthylen im Gemisch mit 0 bis 10 mol-% alpha-Olefinen mit 3 bis 6 Kohlenstoffatomen, z. B. Propen, Buten-1, Isobuten, Penten-1, Hexen-1, eingesetzt und (co)polymerisiert.

Besonders gute Ergebnisse erhält man bereits, wenn man Äthylen homopolymerisiert.

Die erfindungsgemäße, mit vorstehend beschriebenem Katalysatorsystem initiierte Polymerisation kann in der Gasphase oder in Suspension durchgeführt werden. Bei der bevorzugten Polymerisation in Suspension werden die Reaktionsteilnehmer, vorzugsweise in einem Kohlenwasserstoff oder einem Kohlenwasserstoffgemisch dispergiert und bei Drücken von 2 bis 40 bar (absolut), vorzugsweise 2 bis 11 bar und Temperaturen von 60 bis 100 °C polymerisiert. Dabei kann gegebenenfalls durch Zusatz von Wasserstoff die Kettenlänge der entstehenden Polymerisate, oder anders ausgedrückt, der Polymerisationsgrad der Produkte geregelt werden.

Unter Kohlenwasserstoffen werden im Rahmen dieser Anmeldung Verbindungen verstanden, die aus den Elementen Kohlenstoff und Wasserstoff zusammengesetzt sind, bevorzugt werden gesättigte Verbindungen wie geradkettige, verzweigte und cyclische Alkane oder Paraffinkohlenwasserstoffe, die bei den angegebenen Temperaturen und Drücken zum überwiegenden Teil flüssig vorliegen, z. B. Alkane mit 3 bis 20 Kohlenstoffatomen. Beispiele sind Propan, die Butane, die Pentane, die Hexane, die Heptane, die Octane, die Nonane, die Decane, Decalin, Cyclohexan und deren Gemische.

Zur Einleitung der Polymerisation wird der Katalysatorfeststoff durch Zugabe von Metallorganylverbindung(en) der II. und/oder III. Hauptgruppe(n) des Periodensystems zum Polymerisationsgemisch aktiviert.

Von den vorstehend bereits definierten Verbindungen dieser Art werden aluminiumorganische Verbindungen der allgemeinen Formel $AlR^5{}_zY_{3-z}$ oder Gemische davon bevorzugt, worin $R^5$ gleiche oder verschiedene geradkettige oder verzweigte Alkyl- und/oder Arylreste mit 1 bis 20 Kohlenstoffatomen, Y Wasserstoff und/oder gleiche oder verschiedene Halogenatome, Alkoxy-, Aryloxy- und/oder Siloxyreste mit jeweils 1 bis 20 Kohlenstoffatomen und z 2 oder 3 bedeuten. Besonders bevorzugt sind Aluminiumtriisobutyl, Aluminiumtri-n-octyl und Aluminiumisoprenyl sowie deren Gemische.

Auch die bereits in der Beschreibung von Reaktionsstufe B beschriebenen oligomeren Aluminiumorganylverbindungen können hier eingesetzt werden.

Die Metallorganylverbindungen der II. und III. Hauptgruppen des Periodensystems werden vorzugsweise gegenüber den im Katalysatorfeststoff gebundenen Nebengruppenelementen der IV. und V. Hauptgruppen im Überschuß verwendet. Es ist natürlich auch möglich, einen Unterschuß oder stöchiometrische Mengen einzusetzen. In einer bevorzugten Ausführungsform werden z. B. 2 bis 100, insbesondere 5 bis 50 mol Aluminiumverbindung(en) je Mol im Katalysatorfeststoff enthaltenen, dort chemisch gebundenen Titans verwendet.

Das erfindungsgemäße Polymerisationsverfahren kann kontinuierlich oder diskontinuierlich durchgeführt werden. Bei der diskontinuierlichen Verfahrensweise werden in der vorstehend beschriebenen Weise hergestellter Katalysatorfeststoff, Aktivator, alpha-Ole-

fin, gegebenenfalls Kohlenwasserstoff und gegebenenfalls Wasserstoff in den Reaktor, vorzugsweise einen Autoklaven vorgelegt und anschließend die Polymerisation durchgeführt. Es können natürlich einzelne oder alle Komponenten ganz oder teilweise nachträglich zudosiert werden.

Bei der kontinuierlichen Verfahrensweise werden die genannten Reaktionskomponenten getrennt oder als Gemisch in der gewünschten Zusammensetzung in den Reaktor kontinuierlich eingespeist. Auch hier ist eine nachträgliche Dosierung von Teilmengen einzelner oder aller Komponenten möglich, bei Verwendung z. B. von Rohrreaktoren auch an verschiedenen Stellen des Reaktors.

Durch das erfindungsgemäße Verfahren können Polymerisate hergestellt worden, die keiner weiteren Nachbehandlung unterzogen werden müssen. Dies wird erreicht durch die wegen seiner überraschend hohen Aktivität benötigte geringe Menge des Katalysatorsystems, die keine merkliche Beeinträchtigung des Produktes bewirken kann. Ein weiterer Vorteil des Katalysatorsystems ist die Herstellung von Polymerisaten mit hervorragenden Pulvereigenschaften, breiter Molekulargewichtsverteilung, sehr guten physikalischen Eigenschaften und guter Verarbeitbarkeit. Zum Beispiel können die erfindungsgemäß hergestellten Polymerisate durch Blasextrusion "schmelzbruchfrei", z. B. zu Hohlkörpern oder Folien, verformt werden. Von den sehr guten physikalischen Eigenschaften seien hier nur die hohe Steifigkeit, die hohe Schlagzähigkeit und die gute Spannungsrißbeständigkeit genannt.

Die Erfindung wird im folgenden durch Beispiele und Vergleichsbeispiele weiter erläutert.

Der in den Beispielen genannte Schmelzindex $MFI_5$ wird nach DIN (Deutsche Industrie Norm) 53 735 bei 190 °C und 49,03 N (5 kp) Belastung bestimmt.

Der Fließfaktor $F_{21,6}$ ist der Quotient der Schmelzindizes bei 211,82 N (21,6 kp) und 49,03 N (5 kp) Belastung und kann als Maß für die Molekulargewichtsverteilung gelten.

Der in der erfindungsgemäßen Polymerisation verwendbare Katalysator kann z. B. in folgender Weise hergestellt werden:

a) Herstellung des Primärfeststoffes

900 ml einer Hexan-Heptan-Lösung, die 0,5 mol n-Butyl-sec-Butylmagnesium enthielten, wurden innerhalb von 2 Stunden bei 60 °C zu 1 mol Chloroform in 420 ml Isooctan dosiert. Es bildete sich ein brauner Feststoff. Man rührte noch ca. eine halbe Stunde bei 60 °C und wusch anschließend den Feststoff bei 50 bis 60 °C 3 mal mit jeweils 3 Liter Isooctan durch wiederholtes Sedimentieren und Dekantieren. Anschließend wurde auf 1 Liter aufgefüllt.

b) Herstellung des Katalysatorfeststoffes

b1) 100 ml der nach a) hergestellten Primärfeststoffsuspension, die 50 mmol Magnesium enthielten, wurden vorgelegt und bei Raumtemperatur unter Rühren mit 30 mmol $TiCl_4$ und 60 mmol Äthylaluminiumsesquichlorid, gelöst in 30 ml Isooctan, versetzt. Nach dem Aufheizen auf 50 °C wurde 1,5 Stunden gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Der Feststoff enthielt 27,9 mmol gebundenes Titan.

Nach Aufnehmen in 150 ml Isooctan wurden bei 50 °C unter Rühren 7,5 mmol Di-t-butylperoxid, gelöst in 20 ml Isooctan, in 1/2 Stunde zudosiert. Dann wurde die Suspension auf 80 °C erwärmt, 1 Stunde gerührt, auf 50 °C abgekühlt und 4 mal mit je 150 ml Isooctan gewaschen. Nach Aufnehmen des Feststoffes in 100 ml Isooctan erfolgte die Zugabe von 136 mmol $TiCl_4$. Dann wurde auf 90 °C erwärmt, 1/2 Stunde bei dieser Temperatur gerührt, auf 50 °C abgekühlt und so lange unter wiederholtem Sedimentieren und Dekantieren mit Isooctan gewaschen, bis in der dekantierten Flüssigkeit praktisch kein Titan bzw. Chlorid mehr nachweisbar waren.

Der Feststoff wurde zur Nachbehandlung erneut in 300 ml Isooctan suspendiert und 3 Stunden bei 90 °C gealtert. Nach wiederholtem Auswaschen bei 50 °C mit Isooctan enthielt der Katalysatorfeststoff insgesamt 28,4 mmol gebundenes Titan.

b2) 100 ml der nach a) hergestellten Primärfeststoffsuspension, die 50 mmol Magnesium enthielten, wurden vorgelegt und bei Raumtemperatur unter Rühren mit 20 mmol $TiCl_4$ und 40 mmol Äthylaluminiumsesquichlorid, gelöst in 20 ml Isooctan, versetzt. Nach dem Aufheizen auf 50 °C wurde 1,5 Stunden gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Der Feststoff enthielt 19,1 mmol gebundenes Titan.

Nach Aufnehmen in 150 ml Isooctan wurden bei 50 °C unter Rühren 10 mmol Di-t-butylperoxid, gelöst in 20 ml Isooctan, in 1/2 Stunde zudosiert. Dann wurde die Suspension auf 80 °C erwärmt, 1 Stunde gerührt, auf 50 °C abgekühlt und 4 mal mit je 150 ml Isooctan gewaschen. Nach Aufnehmen des Feststoffes in 100 ml Isooctan erfolgte die Zugabe von 45,5 mmol $TiCl_4$. Dann wurde auf 90 °C erwärmt, 1/2 Stunde bei dieser Temperatur gerührt, auf 50 °C abgekühlt und so lange unter wiederholtem Sedimentieren und Dekantieren mit Isooctan gewaschen, bis in der dekantierten Flüssigkeit praktisch kein Titan bzw. Chlorid mehr nachweisbar waren.

Der Feststoff wurde zur Nachbehandlung erneut in 300 ml Isooctan suspendiert und 3 Stunden bei 90 °C gealtert. Nach widerholtem Auswaschen bei 50 °C mit Isooctan enthielt der Katalysatorfeststoff insgesamt 19,3 mmol gebundenes Titan.

b3) 100 ml der nach a) hergestellten Primärfeststoffsuspension, die 50 mmol Magnesium enthielten, wurden vorgelegt und bei Raumtemperatur unter Rühren mit 20 mmol $TiCl_4$ und 40 mmol Äthylaluminiumsesquichlorid, gelöst in 20 ml Isooctan, versetzt. Nach dem Aufheizen auf 50 °C wurde 1,5 Stunden gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Der Feststoff enthielt 19,6 mmol gebundenes Titan.

Nach Aufnehmen in 150 ml Isooctan wurden bei 50 °C unter Rühren 10 mmol t-Butylhydroperoxid zugegeben. Dann wurde die Suspension auf 80 °C erwärmt, 1 Stunde gerührt, auf 50 °C abgekühlt und 4 mal mit je 150 ml Isooctan gewaschen. Nach Aufnehmen des Feststoffes in 100 ml Isooctan erfolgte die Zugabe von 91 mmol $TiCl_4$. Dann wurde auf 90 °C erwärmt, 1/2 Stunde bei dieser Temperatur gerührt, auf 50 °C abgekühlt und so lange unter wiederholtem Sedimentieren und Dekantieren mit Isooctan gewaschen, bis in der dekantierten Flüssigkeit praktisch kein Titan bzw. Chlorid mehr nachweisbar waren.

Der Feststoff wurde zur Nachbehandlung erneut in 300 ml Isooctan suspendiert und 3 Stunden bei 90 °C gealtert. Nach wiederholtem Auswaschen bei 50 °C mit Isooctan enthielt der Katalysatorfeststoff insgesamt 21,6 mmol gebundenes Titan.

b4) 100 ml der nach a) hergestellten Primärfeststoffsuspension, die 50 mmol Magnesium enthielten, wurden vorgelegt und bei Raumtemperatur unter Rühren mit 15 mmol t-Butylhydroperoxid versetzt. Nach dem Erwärmen auf 80 °C wurde die Suspension 1 Stunde gerührt, anschließend mit 100 mmol $TiCl_4$ versetzt und weitere 2 Stunden bei 90 °C gerührt.

Nach dem Abkühlen auf 50 °C erfolgte das Auswaschen des Feststoffs durch wiederholtes Sedimentieren und Dekantieren, bis im dekantierten Isooctan praktisch kein Aluminium und kein Chlorid mehr nachweisbar waren.

Der Feststoff enthielt 19,2 mmol gebundenes Titan. Nach Aufnehmen in 130 ml Isooctan wurden bei Raumtemperatur unter Rühren 20 mmol $TiCl_4$ und anschließend 40 mmol Äthylaluminiumsesquichlorid, gelöst in 20 ml Isooctan, zugegeben. Nach dem Aufwärmen auf 50 °C wurde 1,5 Stunden bei dieser Temperatur gerührt und anschließend so lange gewaschen, bis im dekantierten Isooctan praktisch kein Aluminium und kein Chlorid mehr nachweisbar waren.

Der Katalysatorfeststoff enthielt insgesamt 39 mmol gebundenes Titan.

c) Herstellung eines nicht erfindungsgemäßen Katalysatorfeststoffes

c1) 100 ml der nach a) hergestellten Primärfeststoffsuspension, die 50 mmol Magnesium enthielten, wurden vorgelegt und bei Raumtemperatur unter Rühren mit 20 mmol $TiCl_4$ und 40 mmol Äthylaluminiumsesquichlorid, gelöst in 20 ml Isooctan, versetzt. Nach dem Aufheizen auf 50 °C wurde 1,5 Stunden gerührt und bei dieser Temperatur so lange unter wiederholtem Sedimentieren und Dekantieren mit Isooctan gewaschen, bis in der dekantierten Flüssigkeit praktisch kein Aluminium und kein Chlorid mehr nachweisbar waren.

Der Feststoff wurde zur Nachbehandlung in 300 ml Isooctan suspendiert und 3 Stunden bei 90 °C gealtert. Nach wiederholtem Auswaschen bei 50 °C mit Isooctan enthielt der Katalysatorfeststoff insgesamt 17,8 mmol gebundenes Titan.

Beispiele 1 - 9 und Vergleichsversuche A und B

Die Polymerisation wurde in einem 5-l-Laborautoklaven in 3500 ml Isooctan unter Rühren bei 650 $min^{-1}$ und 10 bar Gesamtdruck durchgeführt.

In Tabelle 1 sind die Versuche mit dem Polymerisationsergebnis zusammengefaßt.

Während sich die Produkte der Beispiele 1 bis 9 "schmelzbruchfrei" extrudieren ließen, zeigten die Extrudate der Vergleichsversuche A und B Schmelzbruch.

Tabelle 1

| Beispiele und Vergleichsversuche | Katalys. hergestellt nach | mgTi 1) | 2 ml $AlR^5_3$ | Vol.-% $H_2$ im Gasraum | °C | Zeit in Stunden | g PE 2) | $MFI_5/F_{21,6}$ (Pulver) | $MFI_5/F_{21,6}$ (Granulat) | Schüttdichte g/l | Feinanteil < 100 µm in % |
|---|---|---|---|---|---|---|---|---|---|---|---|
| 1 | b1) | 18,9 | Al-isoprenyl | 24,5 | 90 | 2 | 1110 | 0,33/17,9 | 0,28/18,9 | 440 | 0,2 |
| 2 | " | 20,1 | " | 33 | 90 | 2 | 1080 | 1,30/16,5 | 1,10/18,2 | 455 | 0,2 |
| 3 | b2) | 16,5 | " | 32 | 90 | 1 3/4 | 1160 | 1,30/15,6 | 1,20/17,4 | 385 | 0,0 |
| 4 | b3) | 15,4 | " | 27 | 90 | 2 | 1095 | 0,31/18,1 | 0,28/20,7 | 450 | 0,2 |
| 5 | " | 15,4 | " | 24,5 | 90 | 2 | 1125 | 0,32/17,7 | 0,26/20,8 | 455 | 0,1 |
| 6 | " | 16,5 | $Al(n-C_8H_{17})_3$ | 24 | 90 | 1 3/4 | 1151 | 0,29/16,2 | 0,23/20,0 | 385 | 0,0 |
| 7 | b4) | 19,4 | Al-isoprenyl | 20 | 90 | 2 | 1120 | 0,44/15,1 | 0,39/16,8 | 345 | 0,1 |
| 8 | " | 19,4 | " | 17 | 90 | 2 | 1100 | 0,43/15,4 | 0,39/17,1 | 355 | 0 |
| 9 | " | 23 | " | 28 | 90 | 2 3/4 | 1150 | 1,3 /15,3 | 1,2 /16,9 | 350 | 0 |
| A | c1) | 14,0 | Al-isoprenyl | 23 | 90 | 2 | 1280 | 0,34/14,6 | 0,30/15,7 | 380 | 0,2 |
| B | " | 14,0 | $Al(n-C_8H_{17})_3$ | 26 | 90 | 2 | 1235 | 0,45/15,1 | 0,41/16,0 | 375 | 0,3 |

1) gebunden auf den Katalysatorfeststoff

2) Polyethylen

Patentansprüche

1. Verfahren zur diskontinuierlichen oder kontinuierlichen Polymerisation von alpha-Olefinen in der Gasphase oder in Kohlenwasserstoffen als Dispergiermittel bei Drücken von 2 bis 40 bar und Temperaturen von 60 bis 100 °C, gegebenenfalls unter Verwendung von Wasserstoff als Molekulargewichtsregler in Gegenwart eines Feststoffes als Katalysator, der Elemente der IV. und/oder V. Nebengruppe(n) des Periodensystems der Elemente, Magnesium, Halogen, Sauerstoff und gegebenenfalls ein (weiteres) Element der II. und/oder III. Hauptgruppe(n) des Periodensystems enthält und mit Metallorganylverbindungen der II. und/oder III. Hauptgruppe(n) des Periodensystems aktiviert wird, dadurch gekennzeichnet, daß der anschließend in der Polymerisation von alpha-Olefinen noch zu aktivierende Katalysator durch Umsetzung eines Magnesium und Halogen enthaltenden Primärfeststoffes in zwei aufeinanderfolgenden Reaktionsstufen A und B hergestellt wird, wobei der Feststoff auf Basis von Magnesiumverbindung

   in Reaktionsstufe A mit Peroxidverbindung(en) und mit Halogen enthaltender(n) Metallverbindung(en) eines oder mehrerer Elemente(s) der IV. und/oder V. Nebengruppe(n) des Periodensystems behandelt wird und

   in Reaktionsstufe B mit Halogen enthaltender(n) Metallverbindung(en) von Elementen der IV. und/oder V. Nebengruppe(n) und mindestens einer Metallorganylverbindung der II. und/oder III. Hauptgruppe(n) des Periodensystems umgesetzt wird.

2. Verfahren nach Anspruch 1, dadurch gekennzeichnet, daß der Primärfeststoff aus in Kohlenwasserstoffen löslichen Magnesiumverbindungen und Chlorkohlenwasserstoff- und/oder Chlorkohlenstoffverbindungen mit 1 bis 6 Kohlenstoffatomen, von denen wenigstens eines, mindestens zwei Chloratome direkt gebunden trägt, hergestellt wird.

3. Verfahren nach Anspruch 1 oder 2, dadurch gekennzeichnet, daß der (Primär-)Feststoff in Reaktionsstufe A in Kohlenwasserstoffen suspendiert und mit Dialkylperoxiden, Alkylhydroperoxiden oder Gemischen dieser Verbindungen und mit Halogen enthaltenden Metallverbindung(en) von Elementen der IV. und/oder V. Nebengruppe(n) des Periodensystems umgesetzt wird.

4. Verfahren nach Anspruch 3, dadurch gekennzeichnet, daß der (Primär-)Feststoff in der Reaktionsstufe A mit Dialkylperoxiden und/oder Alkylhydroperoxiden und mit Titanverbindungen der allgemeinen Formel $X_aTi(OR^3)_{4-a}$ oder Gemischen der Titanverbindungen umgesetzt wird, in der X gleiche oder verschiedene Halogenatome, $R^3$ gleiche oder verschiedene, geradkettige oder verzweigte Alkyl- und/oder Arylreste mit 1 bis 8 Kohlenstoffatomen und a 2, 3 oder 4 bedeuten.

5. Verfahren nach einem der Ansprüche 1, 3 oder 4, dadurch gekennzeichnet, daß der (Primär-)Feststoff in Reaktionsstufe A erst mit den Peroxidverbindungen umgesetzt und anschließend mit der (den) Halogen enthaltenden Metallverbindung(en) von Elementen der IV. und/oder V. Nebengruppe(n) des Periodensystems umgesetzt wird.

6. Verfahren nach einem der Ansprüche 1 bis 5, dadurch gekennzeichnet, daß der (Primär-)Feststoff in Reaktionsstufe B in Kohlenwasserstoffen dispergiert und mit Titanverbindungen der allgemeinen Formel $X'_bTi(OR^4)_{4-b}$ oder Gemischen dieser Titanverbindungen sowie aluminiumorgansichen Verbindungen umgesetzt wird, wobei X' gleiche oder verschiedene Halogenatome, $R^4$ gleiche oder verschiedene, geradkettige oder verzweigte Alkyl- und/oder Arylreste mit 1

bis 8 Kohlenstoffatomen und b 2, 3 oder 4 bedeuten.

7. Verfahren nach einem der Ansprüche 1 bis 6, dadurch gekennzeichnet, daß der in den zwei Reaktionsstufen modifizierte Katalysatorfeststoff mit Kohlenwasserstoffen gewaschen, in Kohlenwasserstoffen dispergiert und mit in Kohlenwasserstoffen gelösten Metallorganylverbindungen der II. und/oder III. Hauptgruppe(n) des Periodensystems umgesetzt wird.

8. Verfahren nach Anspruch 7, dadurch gekennzeichnet, daß als Metallorganylverbindungen der II. und/oder III. Hauptgruppe(n) des Periodensystems aluminiumorganische Verbindungen eingesetzt werden.

9. Verfahren nach einem der Ansprüche 1 bis 6, dadurch gekennzeichnet, daß man den modifizierten Feststoff in Kohlenwasserstoff suspendiert, mehrere Stunden bei 50 bis 100 °C altert und anschließend auswäscht.

10. Verfahren nach einem der Ansprüche 1 bis 9, dadurch gekennzeichnet, daß man den in zwei Stufen bereiteten und gegebenenfalls nachbehandelten Katalysatorfeststoff bei der Polymerisation der alpha-Olefine mit aluminiumorganischen Verbindungen der allgemeinen Formel $AlR^8_zY_{3-z}$, oligomere Aluminiumverbindungen oder Gemischen dieser Verbindungen aktiviert, worin $R^5$ gleiche oder verschiedene, geradkettige oder verzweigte Alkyl- und/oder Arylreste mit 1 bis 20 Kohlenstoffatomen, Y Wasserstoff und/oder gleiche oder verschiedene Halogenatome, Alkoxy-, Aryloxy- und/oder Siloxygruppen mit jeweils 1 bis 20 Kohlenstoffatomen und z 2 oder 3 bedeuten.